# EUROPÄISCHE PATENTSCHRIFT

(11) **EP 2 122 225 B1**
(45) Veröffentlichungstag und Bekanntmachung des Hinweises auf die Patenterteilung: **15.02.2012**
(21) Anmeldenummer: 07857310.2
(22) Anmeldetag: 10.12.2007
(51) Int. Cl.: F16L 47/30, F16L 47/28, F16L 41/08

(54) **VERBINDUNGSANORDNUNG FÜR FLUIDLEITUNGEN**
CONNECTING ARRANGEMENT FOR FLUID LINES
DISPOSITIF DE RACCORDEMENT POUR CONDUITS DE FLUIDE

(30) Priorität: 12.02.2007 DE 102007007370
(43) Veröffentlichungstag der Anmeldung: 25.11.2009
(73) Patentinhaber: ContiTech Techno-Chemie GmbH, 61184 Karben (DE)
(72) Erfinder: RÖGLIN, Dennis, 61118 Bad Vilbel (DE)
(74) Vertreter: Finger, Karsten
(86) Internationale Anmeldenummer: PCT/EP2007/063577
(87) Internationale Veröffentlichungsnummer: WO 2008/098632

(56) Entgegenhaltungen:
- EP-A- 0 704 356
- DE-A1- 4 427 597
- DE-A1- 19 743 185
- DE-B3- 10 241 921
- US-A1- 2006 152 003

## Beschreibung

Die Erfindung betrifft eine Verbindungsanordnung für Fluidleitungen mit einer Fluidleitung und einer weiteren fluidführenden Komponente, bei der die Fluidleitung mindestens einen endseitigen radial nach außen weisenden Bund aufweist und die mittels einer Halterung axial gegen die weitere fluidführende Komponente verspannbar ist.

Derartige Verbindungsanordnungen sind seit längerem in vielfältigen Ausführungsformen im Einsatz. Die DE 692 15 779 D2 zeigt eine typische derartige Verbindungsanordnung, bei der die Halterung als eine eine Rohrleitung vollständig umschließende Halteplatte ausgebildet ist, die mittels einer seitlich angeordneten Verschraubung auf einen Bund einer Rohrleitung drückt und damit die Rohrleitung in einer Bohrung der weiteren Fluidleitung von einer Komponente festhält.

Eine derartige Halteplatte ist jedoch nur bei Rohrleitungen einsetzbar, die entweder nur an einem Ende einen Bund aufweisen oder ein zweiter Bund erst nach Aufstecken der Halteplatte auf die Fluidleitung an der Fluidleitung erzeugt wird.

Die DE 813 3 297 U1 zeigt eine Flanschverbindung, bei der die Haltevorrichtung aus 2 Flanschhälften besteht, die um eine Rohrleitung mit Bund herumlegbar sind und dann auf einer weiteren fluidführenden Komponente verschraubbar sind. Durch diese Anordnung kann die Flanschverbindung auch an Rohren mit 2 Bunden eingesetzt werden. Dabei sind jedoch zur sicheren Halterung des Rohres mehrere Verschraubungen notwendig. Die DE 102 41 921 B3 zeigt eine Anschlusseinrichtung, bei der eine Fluidleitung mit beispielsweise angelötetem Dichtflansch durch einen gabelförmigen Haltehebel und eine Verschraubung axial in einer weiteren fluidführenden Komponente eingepresst ist.

Eine Lötverbindung beschränkt jedoch erstens die Werkstoffauswahl auf lötbare Werkstoffe, zweitens muss die Lötstelle anschließend gegen Korrosion geschützt werden.

Der Erfindung liegt die Aufgabe zugrunde, eine Verbindungsanordnung der eingangs geschilderten Art zu schaffen, die eine sichere, druckdichte und einfach zu montierende Verbindung von Fluidleitungen ermöglicht, ohne das Wahl der Werkstoffe auf lötbare Stoffe beschränkt ist und die Anordnung keiner zusätzlichen Korrosionsmaßnahme bedarf.

Diese Aufgabe wird dadurch gelöst, dass die Halterung aus einem um die Fluidleitung herumgespritzten Kunststoff ausgebildet ist, wobei die Halterung einen zu der Fluidleitung konzentrischen und diesen vollständig umschließenden Tubus aufweist, der in eine Anschlussbohrung der weiteren fluidführenden Komponente hineinragt, und das in die Anschlussbohrung hineinragende Ende des Tubus von dem mindestens ein endseitigen Bund der Fluidleitung beabstandet endet und die Verbindungsanordnung durch mindestens eine erste Dichtung abdichtbar ist, wobei die Dichtung zwischen dem endseitigen Bund der Fluidleitung, dem Tubus der Halterung und der Anschlussbohrung der weiteren fluidführenden Komponente derart angeordnet ist, dass sie mit allen genannten Bauteilen dichtend in Kontakt steht.

Diese Anordnung hat den Vorteil, dass kein die Oberfläche der Komponenten beeinträchtigendes thermisches Verbindungsverfahren notwendig ist. Auch sind besondere Anforderungen an die Dichtheit der Verbindung von Halterung mit der Fluidleitung nicht zu stellen, da durch die Anordnung der Dichtung die Fluidleitung nicht nur gegen die Halterung, sondern auch gegen die weitere fluidführende Komponente direkt abgedichtet ist. Die Werkstoffwahl für die Fluidleitung unterliegt damit fast keinen Beschränkungen, da thermische Verfahren nicht notwendig sind. Außerdem ist durch das Spritzverfahren die Halterung auch bei schwierigen Geometrien und bei Leitungen mit zwei endseitigen Bunden einfach anbringbar.

In einer Weiterbildung der Erfindung weist die Fluidleitung mindestens im Bereich der Umspritzung durch die Halterung eine Rändelung auf.

Die Rändelung verbessert sowohl die Haftfähigkeit der Halterung auf der Fluidleitung allgemein als auch die Verdrehfestigkeit der Fluidleitung in der Halterung im Besonderen.

In einer Weiterbildung der Erfindung weist der in die Anschlussbohrung der weiteren fluidführenden Komponente hineinragende Tubus der Halterung mindestens eine Ringnut auf, die von dem dem Bund der Fluidleitung zugeordneten Ende beabstandet so angeordnet ist, dass sie noch im Bereich der Anschlussbohrung der weiteren fluidführenden Komponente zu Liegen kommt, wobei in der mindestens einen Ringnut je eine weitere Dichtung angeordnet ist, die den Tubus gegen die Anschlussbohrung der weiteren fluidführenden Komponente abdichtet.

Diese Dichtung verhindert einerseits, dass Schmutz oder Feuchtigkeit in die Anschlussbohrung der weiterführenden Komponente eindringt, andererseits erhöht diese Dichtung die Sicherheit gegen Undichtigkeiten.

In einer weiteren Ausführungsform der Erfindung ist jede weitere Dichtung aus einem vom Werkstoff der ersten Dichtung abweichenden Werkstoff ausgebildet.

Die verschiedenen Werkstoffe können beispielsweise durch unterschiedliches Temperaturverhalten die Dichtheit der Verbindungsanordnung beispielsweise in großen Temperaturbereichen verbessern.

Anhand der Zeichnung wird nachstehend ein Beispiel der Erfindung näher erläutert:

Es zweigt:
- Fig. 1: einen Längsschnitt durch eine erfindungsgemäße Verbindungsanordnung und
- Fig. 2: einen vergrößerten Teilabschnitt aus Fig. 1

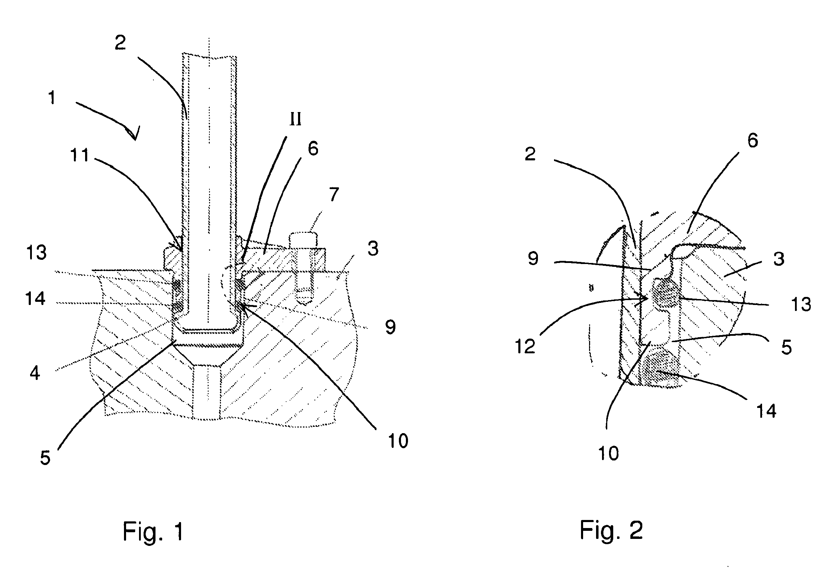

Die in Fig. 1 gezeigte Verbindungsanordnung 1 weist eine Fluidleitung 2 aus einer Aluminiumlegierung und eine weitere fluidführende Komponente 3 auf, wobei die weitere fluidführende Komponente 3 nur in einem Teilausschnitt gezeigt ist.

Die Fluidleitung 2 weist endseitig einen radial nach außen weisenden Bund 4 auf. Die Fluidleitung 2 ragt mit ihrem endseitigen Bund 4 in einer Anschlussbohrung 5 der weiteren fluidführenden Komponente 3 hinein.

Die Fluidleitung 2 ist von einer Halterung 6 aus einem Kunststoffmaterial umschlossen, die mittels einer Schraube 7 auf der weiteren fluidführenden Komponente 3 befestigt ist. Die Halterung 6 weist einen Tubus 9 auf, der ebenfalls in die Anschlussbohrung 5 der weiteren fluidführendern Komponente 3 hineinragt. Die Halterung 6 ist mittels eines Kunststoffspritzgießvorgangs derart um die Fluidleitung 2 herumgespritzt, dass die Fluidleitung 2 konzentrisch zu dem Tubus 9 angeordenet ist und mit ihrem endseitigen Bund 4 so aus dem Tubus 5 axial herausragt, dass der Bund 4 vom Ende 10 des Tubus axial beabstandet ist.

Die Befestigung der Halterung 6 auf der weiteren fluidführenden Komponente 3 erfolgt dabei radial zu dem Tubus und damit der Fluidleitung 2 versetzt.

Das Spritzverfahren gewährleistet eine unlösbare und feste axiale Festlegung der Fluidleitung 2 in der Halterung 6. Die Fluidleitung 2 weist im Bereich 11 der umspritzten Halterung 6 eine hier nicht gezeigte axial ausgerichtete Verzahnung auf, die die Verdrehsicherheit der Fluidleitung 2 gegen die Halterung 6 verbessert.

In der Fig. 2 ist in einer Ausschnittvergrößerung gezeigt, dass der Tubus 9 eine Ringnut 12 aufweist, die vom Ende 10 des Tubus 2 beabstandet ist. In der Ringnut 12 ist eine O-Ring-Dichtung 13 angeordnet, die mit der Wand der Anschlussbohrung 5 dichtend in Kontakt steht.

Innerhalb der Anschlussbohrung 5 der weiterführenden Fluidkomponente 2 ist eine O-Ring-Dichtung 14 so angeordnet, dass die zwischen dem Bund 4, der Wand der Anschlussbohrung 5 und dem Tubus 9 eingeschlossen ist und mit dem sie einschließenden Bauteilen 4, 5 und 2 in dichtendem Kontakt steht. Durch diese Anordnung der Dichtung 14 ist die Dichtheit der Verbindungsanordnung auch dann gegeben, wenn aufgrund von Fertigungstoleranzen die Verbindung zwischen der Fluidleitung 2 und der Halterung 6 nicht dicht sein sollte.

### Bezugszeichenliste

### (Teil der Beschreibung)

- 1: Verbindungsanordnung
- 2: Fluidleitung
- 3: weitere fluidführende Komponente
- 4: Bund der Fluidleitung 2
- 5: Anschlussbohrung der weiteren fluidführenden Komponente 3
- 6: Halterung
- 7: Schraube
- 9: Tubus der Halterung 6
- 10: Ende des Tubus 9
- 11: umspritzter Bereich der Fluidleitung 2
- 12: Ringnut des Tubus 9
- 13: O-Ring-Dichtung
- 14: O-Ring-Dichtung

## Patentansprüche

1. Verbindungsanordnung (1) für Fluidleitungen (2) mit einer Fluidleitung (2) und weiteren fluidführenden Komponente (3), bei der die Fluidleitung (2) mindestens einen endseitigen radial nach außen weisenden Bund (4) aufweist und die mittels einer Halterung (6) axial gegen die weitere fluidführende Komponente (3) verspannbar ist, **dadurch gekennzeichnet, dass** die Halterung (6) aus einem um die Fluidleitung (2) herumgespritzten Kunststoff ausgebildet ist, wobei die Halterung (6) einen zu der Fluidleitung (2) konzentrischen und diesen vollständig umschließenden Tubus (9) aufweist, der in eine Anschlussbohrung (5) der weiteren fluidührenden Komponente (3) hineinragt und das in die Anschlussbohrung (5) hineinragende Ende des Tubus (9) von dem mindestens einen endseitigen Bund (4) der Fluidleitung (2) beabstandet endet und die Verbindungsanordnung (1) durch mindestens eine erste Dichtung (14) abdichtbar ist, wobei die Dichtung (14) zwischen dem endseitigen Bund (4) der Fluidleitung (2), dem Tubus (9) der Halterung (6) und der Anschlussbohrung (5) der weiteren fluidführenden Komponente (3) derart angeordnet ist, dass sie mit allen genannten Bauteilen dichtend in Kontakt steht.

2. Verbindungsanordnung (1) nach Anspruch 1, **dadurch gekennzeichnet, dass** die Fluidleitung (2) mindestens im Bereich (11) der Umspritzung durch die Halterung eine Rändelung aufweist.

3. Verbindungsanordnung (1) nach Anspruch 1 oder 2, **dadurch gekennzeichnet, dass** der in die Anschlussbohrung (5) der weiteren fluidführenden Komponente (3) hineinragende Tubus (9) der Halterung (6) mindestens eine Ringnut (12) aufweist, die von dem dem Bund (4) der Fluidleitung (2) zugeordneten Ende beabstandet so angeordnet ist, dass sie noch im Bereich der Anschlussbohrung (5) der weiteren fluidführenden Komponente (3) zu Liegen kommt, wobei in der mindestens einen Ringnut (12) je eine weitere Dichtung (13) angeordnet ist, die den Tubus (9) gegen die Anschlussbohrung (5) der weiteren fluidführenden Komponente (3) abdichtet.

4. Verbindungsanordnung (1) nach Anspruch 3, **dadurch gekennzeichnet, dass** jede weitere Dichtung (13) aus einem vom Werkstoff der ersten Dichtung (14) abweichenden Werkstoff ausgebildet ist.

## Claims

1. Connecting arrangement (1) for fluid lines (2), comprising a fluid line (2) and a further fluid-conducting component (3), in which the fluid line (2) has at least one end-side collar (4) facing radially outwards, and can be braced axially against the further fluid-conducting component (3) by means of a holder (6), **characterized in that** the holder (6) is formed from a plastic which is injected around the fluid line (2), the holder (6) having a tube (9) which is concentric with respect to the fluid line (2) and completely surrounds the latter and projects into a connecting bore (5) of the further fluid-conducting component (3), and that end of the tube (9) which projects into the connecting bore (5) ends at a distance from the at least one end-side collar (4) of the fluid line (2), and the connecting arrangement (1) can be sealed by at least one first seal (14), the seal (14) being arranged between the end-side collar (4) of the fluid line (2), the tube (9) of the holder (6) and the connecting bore (5) of the further fluid-conducting component (3) in such a manner that said seal is in contact with all of the abovementioned components in a sealing manner.

2. Connecting arrangement (1) according to Claim 1, **characterized in that** the fluid line (2) has a knurled portion at least in the region (11) of encapsulation by the holder.

3. Connecting arrangement (1) according to Claim 1 or 2, **characterized in that** the tube (9) of the holder (6), which tube projects into the connecting bore (5) of the further fluid-conducting component (3), has at least one annular groove (12) which is arranged spaced apart from the end assigned to the collar (4) of the fluid line (2) such that said annular groove also comes to lie in the region of the connecting bore (5) of the further fluid-conducting component (3), with a further seal (13) being respectively arranged in the at least one annular groove (12), said seal sealing off the tube (9) against the connecting bore (5) of the further fluid-conducting component (3).

4. Connecting arrangement (1) according to Claim 3, **characterized in that** each further seal (13) is formed from a material differing from the material of the first seal (14).

## Revendications

1. Ensemble de raccordement (1) pour conduit (2) de fluide, présentant un conduit de fluide (2) et d'autres composants (3) conduisant le fluide,
le conduit (2) de fluide présentant au moins un collet terminal (4) orienté radialement vers l'extérieur et pouvant être serré au moyen d'un support (6) contre l'autre composant (3) conduisant le fluide, **caractérisé en ce que**
le support (6) est formé d'une matière synthétique moulée par injection autour du conduit (2) de fluide,
**en ce que** le support (6) présente un tube (9) concentrique par rapport au conduit (2) de fluide, entourant complètement ce dernier et pénétrant dans un alésage de raccordement (5) de l'autre composant (3) conduisant le fluide,
**en ce que** l'extrémité du tube (9) qui pénètre dans l'alésage de raccordement (5) se termine à distance du ou des collets terminaux (4) du conduit (2) de fluide,
**en ce que** l'ensemble de raccordement (1) peut être fermé hermétiquement par au moins un premier joint d'étanchéité (14) et
**en ce que** le joint d'étanchéité (14) est disposé entre le collet terminal (4) du conduit (2) de fluide, le tube (9) du support (6) et l'alésage de raccordement (5) de l'autre composant (3) conduisant le fluide de manière à être en contact hermétique avec tous lesdits composants.

2. Ensemble de raccordement (1) selon la revendication 1, **caractérisé en ce que** le conduit (2) de fluide est doté d'un moletage au moins dans la partie (11) où le support est moulé par injection.

3. Ensemble de raccordement (1) selon les revendications 1 ou 2, **caractérisé en ce que** le tube (9) du support (6) qui pénètre dans l'alésage de raccordement (5) de l'autre composant (3) conduisant le fluide présente au moins une rainure annulaire (12) disposée à distance de l'extrémité associée au collet (4) du conduit (2) de fluide de telle sorte qu'il vienne encore se placer au niveau de l'alésage de raccordement (5) de l'autre composant (3) conduisant le fluide et **en ce que** d'autres joints d'étanchéité (13) qui assurent l'étanchéité du tube (9) vis-à-vis de l'alésage de raccordement (5) de l'autre composant (3) conduisant le fluide sont disposés dans la ou les rainures annulaires (12).

4. Ensemble de raccordement (1) selon la revendication 3, **caractérisé en ce que** chaque autre joint d'étanchéité (13) est formé d'un matériau différent du matériau du premier joint d'étanchéité (14).
